# EUROPÄISCHE PATENTSCHRIFT

(11) **EP 1 777 499 B1**
(45) Veröffentlichungstag und Bekanntmachung des Hinweises auf die Patenterteilung: **28.12.2011**
(21) Anmeldenummer: 06122362.4
(22) Anmeldetag: 16.10.2006
(51) Int. Cl.: G01C 21/34

(54) **Verfahren zur Ermittlung einer Route**
Method for determining a route
Procédé pour déterminer une route

(30) Priorität: 18.10.2005 DE 102005049762
(43) Veröffentlichungstag der Anmeldung: 25.04.2007
(73) Patentinhaber: Robert Bosch GmbH, 70442 Stuttgart (DE)
(72) Erfinder: Vogel, Andreas, 31139, Hildesheim (DE); Scherber, Stefan, 31319, Sehnde (DE)

(56) Entgegenhaltungen:
- EP-A- 1 030 167
- EP-A- 1 365 213

## Beschreibung

### Technisches Gebiet

Verfahren zur Ermittlung einer Route auf einer digitalen Karte eines Navigationssystems, bei dem mittels einer Routensuche ein Routenziel gesucht wird.

### Stand der Technik

Verfahren zur Ermittlung einer Fahrroute auf einer digitalen Karte eines Navigationssystems sind aus dem Stand der Technik hinreichend bekannt. Dabei führen die bekannten Navigationssysteme den Anwender auf schnellstem oder kürzestem Weg zu einem bestimmten Ziel. Auch kann die optimale Zielführung nach anderen Kriterien erfolgen. Ist das Ziel erreicht, hört die Zielführung auf.

Aus der DE 102 26 686 A1 ist ein Verfahren zur Ermittlung einer Fahrroute eines Fahrzeuges bekannt, bei dem der Fahrer bei der Ermittlung der Fahrroute weitest möglich entlastet wird. Dazu dient, dass eine Nahzieleingabe sowie eine automatische Bestimmung der aktuellen Fahrzeugposition erfolgt, so dass ausgehend von der Fahrzeugposition ein Verwaltungsgebiet zugeordnet werden kann, in dem sich das Fahrzeug befindet, wobei anschließend die Fahrroute zu dem Nahziel in dem zugeordneten Verwaltungsgebiet ermittelt wird.

EP-A-1 030 167 und EP-A-1365 213 offenbaren jeweils ein Navigationssystem, bei dem nach Eingabe einer Parkmöglichkeit eine Route vom aktuellen Standort dorthin berechnet und anschließend der Benutzer entlang der Route zur ausgewählten Parkmöglichkeit geführt wird. Bei der EP EP-A-1 030 167 ist weiter vorgesehen, dass im Rahmen einer Routensuche ein Routenziel (nämlich eine Parkmöglichkeit) gesucht wird. So schtägt EP1 030 167 vor, dass nach Bestimmung eines Ziels eine Liste nahegelegener Parkmöglichkeiten erzeugt und dem Benutzer zur Auswahl angeboten wird. Zur Erleichterung der Auswahl einer Parkmöglichkeit werden zusätzlich Fußwege von der jeweiligen Parkmöglichkeit zum eigentlichen Ziel bestimmt und dem Benutzer mit ausgegeben.

Häufig besteht aber auch der Wunsch, in der Umgebung des Ziels die benachbarten Straßen zu durchfahren. Dies ist beispielsweise der Fall, wenn das Ziel zwar erreicht wurde, aber die Parkplatzsuche noch aussteht. Auch existieren eine Reihe von landschaftlich besonders attraktiven Straßen, von denen der Fahrzeugführer möglichst viele befahren möchte. Dabei möchte der Fahrzeugführer jedoch vermeiden, dass eine schon einmal befahrene Straße erneut genutzt wird, wie es bei touristischen Rundfahrten der Fall ist.

### Darstellung der Erfindung, Aufgabe, Lösung, Vorteile

Es ist deshalb Aufgabe der Erfindung, ein Verfahren zur Ermittlung einer Fahrroute auf einer digitalen Karte eines Navigationssystems zur Verfügung zu stellen, bei dem nicht die Erreichung des Ziels im Vordergrund steht, sondern die Möglichkeit, in der Umgebung des Ziels eine möglichst große Anzahl von Straßen zu durchfahren.

Gelöst wird diese Aufgabe bei einem Verfahren zur Ermittlung einer Fahrroute mit den in Anspruch 1 angegebenen Merkmalen und mit einem Navigationssystem gemäß Anspruch 6.

Die Grundidee der Erfindung ist es, die Ermittlung einer Route auch auf eine Parkplatzsuche und/oder auf ein Schlendern auszudehnen. Dazu dienen auch folgende Verfahrensschritte:
a) Aufsuchen eines Streckenabschnittes als Routenziel, der von allen noch nicht befahrenen Streckenabschnitten die kürzeste Entfernung zum Startpunkt aufweist,
b) Führung zum Ziel,
c) Aufsuchen eines neuen Streckenabschnittes als Routenziel, der von allen noch nicht befahrenen Streckenabschnitten die kürzeste Entfernung zum Startpunkt aufweist,
d) Durchführung des Verfahrensschrittes c) bis ein Anwender die Suche abbricht, wobei für das Schlendern kein bestimmter Startpunkt bevorzugt wird.

Es ist von Vorteil, dass den Streckenabschnitten ein Gewicht in Form einer Zahlenangabe zugeordnet wird, die Auskunft über die Entfernung zum Startpunkt gibt.

Dabei stellt im Falle der Parkplatzsuche das Gewicht die kürzeste Entfernung zum Startpunkt dar.

Statt möglichst dicht um einen Punkt herum geführt zu werden, wird im Schlendermodus ein Gebiet definiert. Dies trägt der Tatsache Rechnung, dass man in einem Gebiet häufig möglichst viele Straßen sehen möchte. Dabei gibt es aber keine Bevorzugung eines bestimmten Startpunktes. Dies stellt eine Modifikation zur Parkplatzsuche dar. Es ist daher wünschenswert, dass allen Streckenabschnitten das gleiche Gewicht zugeordnet wird, welches sich von einem Gewicht außerhalb des Gebietes unterscheidet. Alle Straßen bekommen somit in dem Gebiet das gleiche Gewicht statt, wie bei der Parkplatzsuche, ein ansteigendes Gewicht in Abhängigkeit von Entfernung zum Startpunkt. Straßen außerhalb des Gebietes bekommen beispielsweise ein sehr hohes Gewicht (z.B. +1000), so dass die Route tatsächlich nur durch das Stadtzentrum führt. Anspruch 4 sieht daher vor, dass im Falle des Schlenderns allen Streckenabschnitten in einem Suchgebiet das gleiche Gewicht zugeordnet wird.

Eine vorteilhafte Ausgestaltung der Erfindung sieht vor, dass neben dem Schlendern und der Parkplatzsuche noch weitere Ziele verfolgt werden, wobei die Führung von einem zum nächsten Ziel erfolgt, ohne dabei Streckenabschnitte doppelt zu nutzen. Dies ist dadurch realisierbar, dass die Streckenabschnitte der eigentlichen Ziele ein sehr kleines Gewicht bekommen. Die Streckenabschnitte im sogenannten "Schlendergebiet" bekommen ein etwas höheres Gewicht und die Streckenabschnitte außerhalb des "Schlendergebietes" ein sehr viel höheres Gewicht. Die Umsetzung erfolgt derart, dass man zum nächsten Ziel geführt wird. So dann wird man auf anderen Wegen zum folgenden Ziel geführt usw.

Schließlich sieht die Erfindung ein Navigationssystem zur Ermittlung einer Fahrroute mit einer digitalen Karte vor, wonach das Navigationssystem derart eingerichtet ist, dass die

Ermittlung der Fahrroute gemäß dem Verfahren nach einem der Ansprüche 1 bis 5 erfolgt.

### Kurze Beschreibung der Zeichnungen

Ein Ausführungsbeispiel der Erfindung wird im Folgenden anhand der Zeichnung näher erläutert. Es zeigt in schematischer Darstellung:

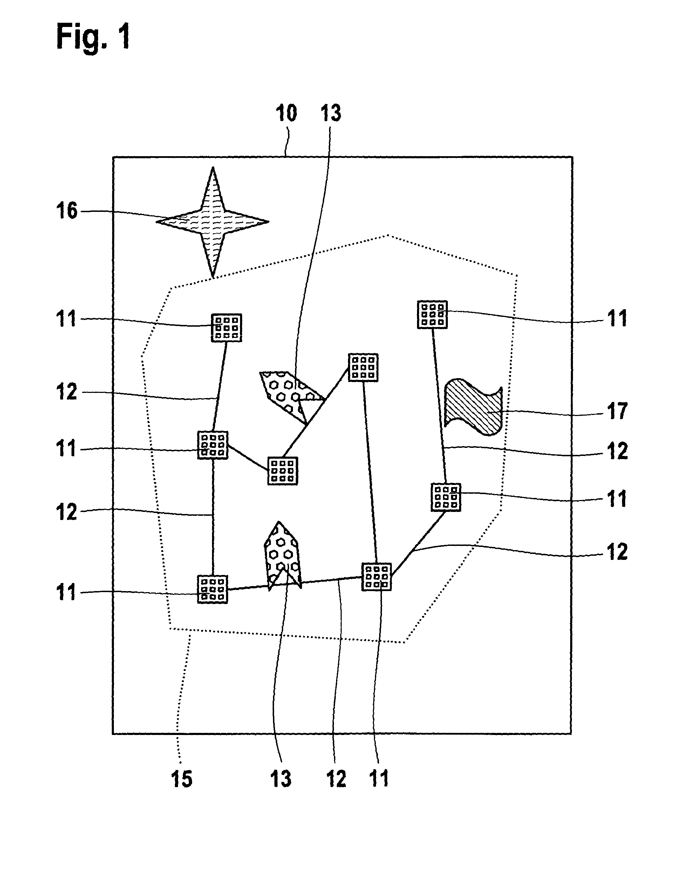

- Fig. 1: ein Verfahren zur Ermittlung einer Fahrroute auf einer digitalen Karte

### Bester Weg zur Ausführung der Erfindung

Die Figur 1 zeigt ein Verfahren zur Ermittlung einer Fahrroute auf einer digitalen Karte 10. Dabei werden auf der digitalen Karte 10 zunächst Punkte 11 und zwischen den Punkten 11 liegende Streckenabschnitte 12 bestimmt. Bei den Punkten 11 kann es sich beispielsweise um Straßenkreuzungspunkte handeln. In der hier gebrauchten Terminologie können die Streckenabschnitte 12 auch als OneCells bezeichnet werden. Diese OneCells erhalten nun ein Flagt in Form einer Zahlenangabe, die darüber Auskunft gibt, ob ein Streckenabschnitt 12 in der Umgebung 15 eines Zielpunktes 14 schon durchfahren worden ist. Statt der üblichen Gewichte, wie Fahrzeit auf der OneCell oder Länge der OneCell werden auch andere variable Gewichte 13 definiert. Die Straßen bzw. OneCells, die dem Startpunkt 16 am nächsten sind, werden als erste durchsucht. Die Güte als Ziel ist also direkt dem Abstand zum Startpunkt 16 proportional. Es wird deshalb eine ganz normale Routensuche (Modus kurze Strecke) gestartet und so die Entfernung für jede OneCell zum Startpunkt 16 ermittelt. Als Gewicht 13 der OneCell wird dann direkt der so ermittelte Abstand zum Startpunkt 16 genommen.

Eine schon einmal befahrene OneCell soll möglichst nicht noch einmal beispielsweise nach einem Parkplatz durchsucht werden. Die OneCell soll aber auch nicht vollkommen gesperrt werden, da unter Umständen ein erneutes Durchfahren als sinnvoll oder notwendig erachtet werden kann.

Aus diesem Grunde bekommt eine durchfahrene OneCell ein hohes Gewicht 13 (und wird deshalb bei zukünftigen Routenberechnungen gemieden). Dazu wird als möglicher Wert 500 hinzu addiert, d.h. man gibt vor, dass die Straße 500 Meter weiter vom Startpunkt 16 entfernt sei als sie tatsächlich ist. Damit sind alle unbefahrenen Straßen im Umkreis von 500m attraktiver und werden damit von der Routensuche bevorzugt. Diese Größe ist optional und hängt sowohl vom Anwender und der Umgebung als auch von der Anwendung ab. Zudem bekommt jede befahrene OneCell einen Flag, d.h. eine Markierung 17, um zu zeigen, dass sie schon befahren wurde. Man wird zudem die dichtesten Straßen zum Startpunkt 16 zuerst absuchen, aber möglichst wenige Straßen doppelt. Wenn man beispielsweise einen Parkplatz gefunden hat, ist der weitere Verlauf der Route ohne Belang. Die Suche kann also jederzeit abgebrochen werden. Einer Orientierung bedarf es also immer nur kurzfristig, da eine Routenplanung nicht bis zum Ende möglich ist. Ein definitives Ziel ist also nicht gegeben. Zudem ändern sich die Gewicht 13 der OneCells ständig, da auf jede befahrene Straße beispielsweise ein Gewichtswert von 500 addiert wird.

Die Routensuche kann beispielsweise per Iteration erfolgen. Ausgangspunkt ist dabei zunächst die OneCell, auf der sich das Fahrzeug befindet. Von allen OneCells, die noch nicht befahren wurden, wird diejenige mit dem kleinsten Gewicht 13 gewählt. Zu dieser OneCell wird eine Route unter Verwendung der wie oben definierten Gewichte gerechnet. Sodann wird während der Zielführung das Gewicht 13 der befahrenen OneCells geändert und eine Markierung 17, d.h. ein Flag, gesetzt. Danach wird die Iteration fortgesetzt. Sollten dabei mehrere OneCells mit gleichem Gewicht 13 vorliegen, wird die benutzt, zu der vom aktuellen Standpunkt aus die kürzeste Route existiert. Die Iteration muss aber erst dann fortgesetzt werden, wenn die OneCells mit dem kleinsten Gewicht erreicht ist oder wenn der Anwender von der Route abweicht.

Statt möglichst dicht um einen Punkt herumgeführt zu werden, wird im sogenannten Schlendermodus ein Gebiet definiert, in dem man möglichst viele Straßen sehen möchte, wobei jedoch von einer Bevorzugung eines bestimmten Startpunktes 16 abgesehen wird. Dies stellt eine Modifikation der Parkplatzsuche dar. Alle Straßen in dem Gebiet bekommen das gleiche Gewicht 13 und nicht wie bei der Parkplatzsuche ein ansteigendes Gewicht in Abhängigkeit von Entfernung zum Startpunkt 16. Dabei bekommen Straßen außerhalb des Zielgebietes ein sehr hohes Gewicht 13 (z.B. 1000), so dass die Route tatsächlich nur in einem Gebiet führt. Ist das Zielgebiet aber kein verbundener Graph, so wird die Route trotzdem durch das Gebiet außerhalb des Zielgebietes geführt. Die OneCells außerhalb des definierten Gebietes haben ein hohes Gewicht, wobei sie aber keinesfalls verboten sind. Auf diese Weise gelingt der Übergang von einem interessanten Gebiet ins nächste auf kürzester Strecke.

Neben dem sogenannten Schlendermodus können auch noch weitere Ziele eingegeben werden, wie beispielsweise alle touristisch interessanten Stellen der Stadt. Dabei wird man von einem Ziel zum nächsten geführt, ohne dabei Wege doppelt zu nutzen. Dies lässt sich dadurch realisieren, dass die OneCells der eigentlichen Ziele ein sehr kleines Gewicht 13 erhalten. Die OneCells im sogenannten Schlendergebiet bekommen sodann ein etwas höheres Gewicht 13 und die OneCells außerhalb des sogenannten Schlendergebietes ein erheblich höheres Gewicht 13. Die Umsetzung lässt sich dann derart gestalten, dass man zum nächsten Ziel geführt wird, danach zum nächsten Ziel ohne Strecken doppelt zu begehen, wenn es möglich ist.

Auch ist es denkbar, Zusatzgewichte für eine kurze und/oder schnelle Route mit den Gewichten 13 zu verknüpfen. Auf diese Weise wird man auf kürzestem Wege zum ersten Ziel geführt. Auf dem Weg zum zweiten Ziel werden aber dann die OneCells des Hinweges gemieden und man wird so auf kürzestem Wege zum zweiten Ziel geführt, ohne auf schon bekannten Wegen gehen zu müssen. Das Gewicht 13, welches eine schon einmal begangene OneCell addiert bekommt, ist dann der akzeptierte Umweg, um keinen Weg doppelt zu durchlaufen.

## Patentansprüche

1. Verfahren zur Ermittlung einer Route auf einer digitalen Karte (10) eines Navigationssystems, bei dem mittels einer Routensuche ein Routenziel gesucht wird, wobei die Ermittlung der Route auch einer Parkplatzsuche und/oder einem Schlendern dient, **dadurch gekennzeichnet, dass** die Parkplatzsuche und/oder das Schlendern folgende Verfahrensschritte aufweisen:
a) Aufsuchen eines Streckenabschnittes (12) als Routenziel, der von allen noch nicht befahrenen Streckenabschnitten (12) die kürzeste Entfernung zum Startpunkt (16) aufweist,
b) Führung zum Ziel,
c) Aufsuchen eines neuen Streckenabschnittes (12) als Routenziel, der von allen noch nicht befahrenen Streckenabschnitten (12) die kürzeste Entfernung zum Startpunkt (16) aufweist,
d) Durchführung der Verfahrensschritte b)-c) bis ein Anwender die Suche abbricht, wobei für das Schlendern kein bestimmter Startpunkt bevorzugt wird.

2. Verfahren nach Anspruch 1, **dadurch gekennzeichnet, dass** den Streckenabschnitten (12) ein Gewicht (13) in Form einer Zahlenangabe zugeordnet wird, die Auskunft über die Entfernungen zum Startpunkt (16) geben.

3. Verfahren nach Anspruch 2, **dadurch gekennzeichnet, dass** im Falle der Parkplatzsuche das Gewicht (13) die kürzeste Entfernung zum Startpunkt (16) darstellt.

4. Verfahren nach Anspruch 2, **dadurch gekennzeichnet, dass** im Falle des Schlenderns allen Streckenabschnitten in einem Suchgebiet das gleiche Gewicht (13) zugeordnet wird.

5. Verfahren nach Anspruch 1, **dadurch gekennzeichnet, dass** neben dem Schlendern und der Parkplatzsuche noch weitere Ziele verfolgt werden, wobei die Führung von einem zum nächsten Ziel erfolgt, ohne dabei möglichst Streckenabschnitte (12) doppelt zu nutzen.

6. Navigationssystem zur Ermittlung einer Fahrroute mit einer digitalen Karte, **dadurch gekennzeichnet, dass** das Navigationssystem derart eingerichtet ist, dass die Ermittlung der Fahrroute gemäß dem Verfahren nach einem der Ansprüche 1 bis 5 erfolgt.

## Claims

1. Method for ascertaining a route on a digital map (10) in a navigation system, in which a route search is used to look for a route destination, wherein the ascertainment of the route is also used for looking for a car park and/or strolling, **characterized in that** the looking for a car park and/or the strolling have the following method steps:
a) looking for a route section (12) as a route destination which, of all the route sections (12) which have not yet been taken, is at the shortest distance from the starting point (16),
b) guidance to the destination,
c) looking for a new route section (12) as a route destination which, of all the route sections (12) which have not yet been taken, is at the shortest distance from the starting point (16),
d) performing method steps b) - c) until a user terminates the search, with no particular starting point being preferred for strolling.

2. Method according to Claim 1, **characterized in that** the route sections (12) are assigned a weight (13) in the form of a numerical statement which provides information about the distances from the starting point (16).

3. Method according to Claim 2, **characterized in that** in the case of looking for a car park the weight (13) represents the shortest distance from the starting point (16).

4. Method according to Claim 2, **characterized in that** in the case of strolling all the route sections in a search area are assigned the same weight (13).

5. Method according to Claim 1, **characterized in that** further aims besides strolling and looking for a car park are also pursued, the guidance from one destination to the next being effected without using route sections (12) twice, as far as possible.

6. Navigation system for ascertaining a driving route with a digital map, **characterized in that** the navigation system is set up such that the driving route is ascertained on the basis of the method according to one of Claims 1 to 5.

## Revendications

1. Procédé pour déterminer un itinéraire sur une carte numérique (10) d'un système de navigation, selon lequel une destination d'itinéraire est recherchée au moyen d'une recherche d'itinéraire, la détermination de l'itinéraire servant également à une recherche de place de stationnement et/ou à une promenade, **caractérisé en ce que** la recherche de place de stationnement et/ou la promenade présentent les étapes de procédé suivante :
a) Recherche d'une portion de trajet (12) en tant que destination de l'itinéraire, laquelle, parmi toutes les portions de trajet (12) non encore parcourues, présente la plus courte distance par rapport au point de départ (16),
b) Guidage jusqu'à la destination,
c) Recherche d'une nouvelle portion de trajet (12) en tant que destination d'itinéraire, laquelle, parmi toutes les portions de trajet (12) non encore parcourues, présente la plus courte distance par rapport au point de départ (16),
d) Exécution des étapes de procédé b)-c) jusqu'à ce qu'un utilisateur interrompe la recherche, aucun point de départ défini n'étant préféré pour la promenade.

2. Procédé selon la revendication 1, **caractérisé en ce qu'**un poids (13) est attribué aux portions d'itinéraire (12) sous la forme d'une indication numérique qui fournit un renseignement sur les distances par rapport au point de départ (16).

3. Procédé selon la revendication 2, **caractérisé en ce que** dans le cas de la recherche d'une place de stationnement, le poids (13) représente la plus courte distance par rapport au point de départ (16).

4. Procédé selon la revendication 2, **caractérisé en ce que** dans le cas de la promenade, le même poids (13) est attribué à toutes les portions de trajet dans une région de recherche.

5. Procédé selon la revendication 1, **caractérisé en ce que** d'autres destinations sont encore suivies en plus de la promenade et de la recherche d'une place de stationnement, le guidage étant effectué d'une destination vers la suivante sans utiliser ici deux fois les portions de trajet (12), si possible.

6. Système de navigation pour déterminer un itinéraire de déplacement avec une carte numérique, **caractérisé en ce que** le système de navigation est configuré de telle sorte que la détermination de l'itinéraire de déplacement est effectuée conformément au procédé selon l'une des revendications 1 à 5.
